# EUROPEAN PATENT SPECIFICATION

(11) **EP 0 539 083 B1**
(45) Date of publication and mention of the grant of the patent: **16.07.1997**
(21) Application number: 92309323.1
(22) Date of filing: 13.10.1992
(51) Int. Cl.: B23H 1/08

(54) **Non-flammable electric discharge machining fluid**
Nicht-entflammbare Bearbeitungsflüssigkeit für Funkenerosionsmaschine
Liquide d'usinage non-inflammable pour machine d'usinage par électroérosion

(30) Priority: 23.10.1991 JP 275590/91
(43) Date of publication of application: 28.04.1993
(73) Proprietor: SODICK CO., LTD., Yokohama Kanagawa 222 (JP)
(72) Inventor: Takahashi, Nobuyuki, c/o Sodick Co., Ltd., Kanagawa 226 (JP); Sugai, Makoto, c/o Japax Incorporated Nagatsuda, Midori-ku, Yokohama, Kanagawa 227 (JP)
(74) Representative: Enskat, Michael Antony Frank

(56) References cited:
- EP-A- 0 221 422
- PATENT ABSTRACTS OF JAPAN vol. 12, no. 121 (M-686) 15 April 1988 & JP-A-62 251 013 (KURITA WATER IND. LTD.) 31 October 1987
- PATENT ABSTRACTS OF JAPAN vol. 14, no. 10 (M-917) 10 January 1989 & JP-A-01 257 517 (NIPPON MINING CO. LTD.) 13 October 1989
- DATABASE WPI Week 9118, Derwent Publications Ltd., London, GB; AN 91132690 & WO-A-91 04820 (JOHNSON CO. LTD.) 18 April 1991
- PATENT ABSTRACTS OF JAPAN vol. 10, no. 151 (M-483) 31 May 1986 & JP-A-61 004 623 (HITACHI SEIKO KK.) 10 January 1986
- DATABASE WPIL Week 9118, Derwent Publications Ltd., London, GB; AN 91132690 & WO-A-91 04820 (JOHNSON CO. LTD.) 18 April 1991

## Description

The present invention is concerned with improvements in and relating to non-flammable electric discharge machining fluid.

Generally, in electric discharge machining the gap formed between an electrode and a conductive workpiece to be machined (hereafter, referred to as a workpiece) is filled with an insulating medium. Intermittent electric discharges take place in order to machine the workpiece. It is desirable to employ an aqueous electric discharge machining fluid so as to secure the safety in the workplace.

In many cases, it is common industrial practice that electric discharge machining is a continuous operation in completely automated plant. Thus in some cases the surface temperature of the workpiece in electric discharge machining rises excessively (e.g. thousands of degrees), therefore it is desirable to employ an aqueous electric discharge machining fluid to reduce the probability of fire.

However, the aqueous electric discharge machining fluids used in industrial practice, have the following disadvantages:
a) electrode wear rate is high and it is difficult to fulfill the machining condition of no more than 1% electrode wear rate indispensable for precision machining,
b) aside from the virtual electrode wear, a partial wear of electrode is involved, for example, due to electrolytic action when plus potential is applied to a tool electrode while minus potential is applied to a workpiece to be machined, and this partial wear of the electrode reduces the machining accuracy,
c) machined iron particles mixed in the machining fluid and newly formed products cause various undesirable phenomena such as partial electrode wear, abnormal electrode wear and reduced resistivity, which results in abnormal discharges, and damage to the workpiece. Almost nothing has been done to elucidate the problem concerning abnormal electric discharge from the products, and therefore, there is no means to prevent them forming.
   Machining fluid can be circulated through filtering apparatus and ion-exchange resins to remove machined iron particles, so that the fluid can be recycled. However, the absorbing capacity of ion-exchange resins conventionally reaches their working limit within a short period of time, and therefore it is necessary to replace the machining fluid frequently.
d) The main ingredient of the aqueous electric discharge machining fluid is water, so a partial electrolysis of water is involved when carrying out electric discharge machining. This is unavoidable. In the event of the electrolysis of water, it produces oxygen, and an undesirable product is formed in the machining fluid by said oxygen.

To add additives or the like, which improve the machining removal rate, to the aqueous electric discharge machining fluid is not being carried out, since ion-exchange resins capture such additives. Additives to improve the machining removal rate were proposed in Japanese Patent Publication No. 4253/1984 and Japanese Publication No. 94223/1987, 71120/1985, 4623/1986, 236623/1987, 236625/1987 and 2618/988, but they are not used in industrial practice because they are also captured by ion-exchange resins.

Furthermore, it is generally recognized that to add matter for preventing forming of products resulting from electric discharge machining to the machining fluid is technically insignificant. This accounts for the fact that adding such matter is not being carried out in industrial practice.

It follows that an aqueous electric discharge machining fluid which, solved the disadvantages a) to d), resulted in electrode wear rate of below 1% and a greatly improved machining removal rate did not exist.

One object of the invention is to provide a non-flammable electric discharge machining fluid which, does not result in partial electrode wear, the electrode wear rate being below 1%, and a greatly improved machining removal rate.

A further object is to provide a non-flammable electric discharge machining fluid having the additional advantage that the machining removal rate greatly improved for long periods of employment.

The non-flammable electric discharge machining fluid according to the present invention, comprises a triblock copolymer represented by the general formula (1) in a non-flammable base solution for electric discharge machining. 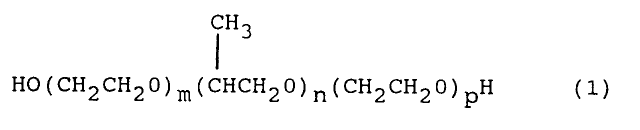 wherein n stands for the following integers; m and p stand for the integers fulfilling the relationship of formula (2).$\begin{matrix}\begin{matrix}\text{n=1 to 25} \\ \begin{matrix}\text{n/(m+p) =0.5 to 2.5}\end{matrix}\end{matrix}\end{matrix}$

Another non-flammable electric discharge machining fluid according to the present invention comprises a substitutive derivative of a phenol nucleus and/or an amine derivative in addition to a block copolymer of the formula (1) in a non-flammable base solution for electric discharge machining.

Figure 1 is a graph showing the range suitable for electric discharge machining for the block copolymer of the formula (1).

Figure 2 is a drawing illustrating the oblique view partially cut of the working tank.

The inventor studied the effects which many a conventional or novel organic polymer produced on discharging conditions of aqueous electric discharge fluid and thereby found that machining characteristics of the machining fluid, particularly electrode wear rate and machining removal rate, are profoundly affected by the structure of molecules of the organic polymers, the balance of hydrophilic and hydrophobic properties included in the organic polymer and the like.

Then the inventor found that if a copolymer of the propylene oxide and ethylene oxide had a specified structure of molecules (block structure), a molecular weight within a particular range, and the hydrophilic groups and hydrophobic groups of the polymer are in the required ratio, the electrode wear rate in the machining fluid with such a copolymer dissolved in water was exceptionally low, below 1%, and the machining removal rate is also improved.,

### (Block Copolymer)

The non-flammable electric discharge machining fluid according to this invention is a fluid of block copolymer represented by the formula (1) dissolved in aqueous base solution.

The block copolymer is a copolymer of propylene oxide and ethylene oxide, having a block structure as the structure of molecules in which the polyethylene oxide chain is bonded in a chain at both sides of the polypropylene oxide chain.

This forms a structure in which a hydrophilic group (polyethylene) oxide chain is bonded to both sides of a hydrophobic group (polypropylene oxide chain).

The polypropylene oxide chain is a chain wherein the number of moles is an integer of from 1 to 25, namely, n in the formula (1) is an integer of from 1 to 25.

The following have been experimentally found: the chain located at the center of said block polymer is a chain of polypropylene oxide in the range of 1 to 25, because the degree of polymerization governs the dissolving of said block copolymer in water to give a machining fluid, and by adjusting the degree of polymerization of the polyethylene oxide chain on both sides to the required ratio with respect to that of the polypropylene oxide chain, a low wear rate of electrode and a high machining removal rate can be realized.

Furthermore, the following have been found experimentally: for the polyethylene oxide chain located at both ends of the block copolymer, the range that the total number of ethylene oxide moles (i.e. m+p) fulfills the relationship of the formula (2) with respect to the propylene oxide moles; namely, the hydrophobic/hydrophilic group ratio is in the range of 0.5 to 2.5 is necessary for realizing a low wear rate of electrode and high machining removal rate, and in terms of the number of ethylene oxide moles (m and p), an optional integer may be taken in the range fulfilling the relationship of the formula (2).$\text{n/(m+p)=0.5 to 2.5}$

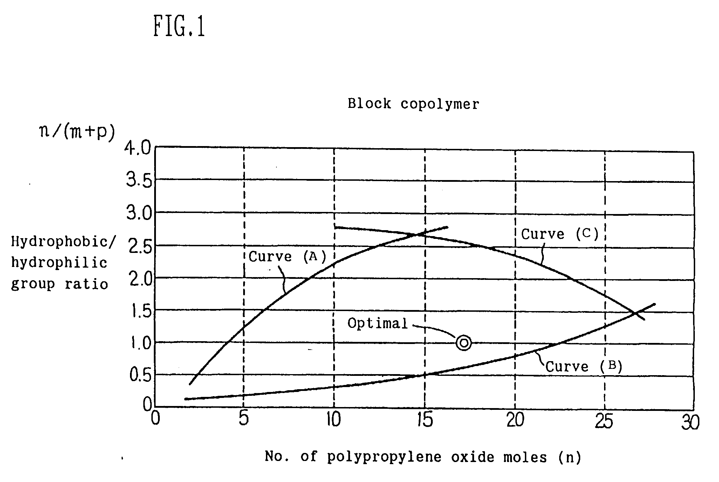

Figure 1 is a graph showing the range suitable for electric discharge machining for the block copolymer of the formula (1) in terms of the hydrophobic/hydrophilic group ratio and the number of the propylene oxide moles.

From the relationship of the figure, a block copolymer of the formula (1) was found.

In Figure 1, curves (A) through (C) show the following:
Curve (A) shows the border which the electrode wear rates becomes 1% and in the area below the curve (A), the wear rate is below 1%.
Curve (B) shows the border at which the block copolymer itself changes from the liquid phase to the solid phase, and in the area above curve (B), it becomes a liquid.
Curve (C) is a critical solubility curve of the block copolymer and water, and in the area below curve (C), it allows dissolving an optional quantity of the block copolymer in water.

Accordingly, the area where the electrode wear rate is less than 1%, the block copolymer is a liquid, and the block copolymer can optionally dissolve in water is in the area embraced by curves (A) through (C) in Figure 1.

That is the area is: the number of propylene oxide moles (n) is from 1 to 25; and the hydryophobic/hydrophilic group ratio ($\text{n/m+p}$)) is in the range of 0.5 to 2.5.

Moreover, the spot marked with a double circle is the best point for decreasing electrode wear rate and improving machining removal rate, where the number of propylene oxide moles (n) is 17 and the hydrophobic/hydrophilic group ratio becomes 1:1.

However, if the quantity to be dissolved of the block copolymer of the formula (1) increases, the viscosity of the machining fluid also increases to such an extent that it exceeds the range of flowability suitable for machining for the machining fluid, so that, there is a limitation also on the quantity to be dissolved.

### (Non-flammable base solution)

The non-flammable base solution used for a non-flammable electric discharge machining fluid according to the invention is water or a fluid for electric discharge machining mainly composed of water, and is a solution being non-flammable due to the water. Water is the pure water in general. Fluid for electric discharge machining being mainly composed of water denotes a fluid being made as a water solution suitable (e.g. in viscosity) for required electric discharge machining by adding water-soluble matter to water. Generally, fluids being used as additives for aqueous electric discharge machining, may be added so long as the effect of the dissolved block copolymer of the formula (1) is not lost.

The volume ratio between the block copolymer of the formula (1) and water of a non-flammable base solution for non-flammable electric discharge machining fluid is 1/9 to 6/4 (block copolymer/water), preferably is 2/8 to 4/6, more preferably is 3.5/6.5

In the non-flammable, electric discharge machining fluid according to the invention, even with the block copolymer of the formula (1) dissolved in the base solution, it may have the effect that the electrode wear rate is below 1% and the machining removal rate goes up remarkably.

However, in the invention the following have been found: by adding a substitutive derivative of phenol nucleus and/or an amine derivative, the electrode wear rate is allowed to further lower, and long-time electric discharge machining may be carried out at higher machining removal rate, then the life span of ion-exchange resins which are generally used in the machining fluid recycling process for purifying machining fluids becomes longer and this is advantageous in industrial practice.

### (Substitutive Derivative of Phenol nucleus and the Like)

To restrict the formation of products in electric discharge machining operation by adding a substitutive derivative of phenol nucleus to the aqueous machining fluid was previously found by said inventor, and the present applicant has filed the patent application (Japanese Patent Application No. 171454/1991).

The previous application disclosed that the addition of additives such as a substitutive derivative of phenol nucleus helped to restrict the formation of products by electrical discharges.

It was generally understood that even if additives are added to an aqueous machining fluid, they will be taken in through ion-exchange resins used for purifying the machining fluid in the recycling process of the aqueous machining fluid and therefore the addition of additives is meaningless.

However, the inventor found the matter showing unique actions: addition of a substitutive derivative of phenol nucleus to the aqueous machining fluid restricts formation of products in the aqueous machining fluid due to the electric discharge machining, then, various undesirable phenomena caused by the products can be reduced, and if a substitutive derivative of phenol nucleus is contained in a solution of the special conditions referred to as the aqueous machining fluid producing electrical discharges, after substitutive derivatives of phenol nucleus have been taken in through ion-exchange resins, they are released from ion-exchange resins.

According to the invention in the previous application, it was further found that aqueous machining fluids to which substitutive derivatives of phenol nucleus are to be added have no restriction.

However, in the present application, it was found that if adding a substitutive derivative of phenol nucleus and/or an amine derivative to the machining fluid dissolved a block copolymer of the formula (1) in the base solution (water), the effects of reduction in electrode wear rate and of improvement in machining removal rate become greater, even with a very small quantity of additives, and these effects continue for a long time, the working time of the machining fluid is prolonged and the life span of the ion-exchange resins used in the recycling process of the machining fluid improves.

Additionally, besides a water-soluble substitutive derivative of phenol nucleus, a water-insoluble oleophilic substitutive derivative of phenol nucleus can be dissolved in a water solution of the block copolymer of the formula (1) because the block copolymer of the formula (1) has a polypropylene oxide chain which also acts as the oleophilic group.

### (Substitutive Derivatives of Phenol Nucleus)

The substitutive derivative of phenol nucleus used in the invention is a substitutive derivative of phenol nucleus wherein at least one of the hydrogen atoms bonded to a phenol nucleus is substituted by the substituent.

As for the substitutive derivative of phenol nucleus, though either water-soluble or oleophilic one may be accepted, the use of water-soluble substitutive derivatives of phenol nucleus is desirable for the non-flammable base solution being water or mainly composed of water.

As for the phenol nucleus of the substitutive derivative of phenol nucleus, one bearing a monovalent phenol is representative, while, a multivalent phenol of more than divalence may be accepted.

The substituent may be an optional substituent so far as it will not mar the effects of the invention, however, hydroxyl, alkyl, alkyloxy, nitro, amino and aldehyde groups are preferred. And if multiple hydrogen atoms of phenol nucleus are substituted by multiple substituents, then, either the same or different substituents, may be accepted.

For alkyl radicals as the substituent, lower alkyl groups, e.g. methyl and butyl, are desirable. As the butyl radical, a tert-butyl group is preferred. Also for alkyloxy radicals, groups in which the alkyl part is lower alkyl, e.g. methoxy and ethoxy groups, are preferred.

To embody the substitutive derivatives of phenol nucleus used in this invention, the following may be given: ortho-cresol, 2,6-xylenol, 2,4,6-trimethylphenol, ortho-tert-butylphenol, 2,6-di-tert-butylphenol, 2,6-di-tert-butyl-4-methylphenol, hydroquinone, butylhydroxyanisole,etc.

Among them, 2,6-di-tert-butyl-4-methylphenol is preferred. As for the substitutive derivatives of phenol nucleus to be added, either single kind or plural kinds may be accepted.

In addition, only substitutive derivatives of phenol nucleus may be added with the sufficient effect, while, to use it jointly with amine derivatives is also allowed.

As for the quantity to be added, even with a very small quantity, the joint use with the block copolymer of the formula (1) allows to result in a restriction of the formation of products during electric discharge machining operation.

Also, a substitutive derivative of phenol nucleus may be added up to the dissolvable limit, and in such case, it is possible to increase the effects of the addition of a substitutive derivative of phenol nucleus. The quantity to be dissolved depends on the quantity of the block copolymer of the formula (1) dissolved in water.

The substitutive derivative of phenol nucleus is effective even from an addition of 50ppm (reference of total quantity of the block copolymer of formula (1) and non-flammable base solution), and adding up to about 3 percent by weight (by weight of the base solution).

### (Amine Derivatives)

Dissolving amine derivatives in an aqueous solution of the block copolymer of the formula (1), results in similar effects as when the substitutive derivative of phenol nucleus is added.

For amine derivatives as well, either water-soluble or oleophilic derivative may be acceptable. They can jointly be used with substitutive derivatives.

As the amine derivative, for example, the following may be given:
di-secondary butyl-para-phenylenediamine,
phenyl-α-napthylamine, phenyl-β-napthylamine,
N,N'-di-β-napthyl-para-phenylenediamine,
N,N'-diphenyl-para-phenylenediamine,
N,N'-diallyl-para-phenylenediamine,
N-phenyl-N'-isopropyl-para-phenylenediamine,
6-ethoxy-2,2,4-trimethyl-1,2-dihydroquinoline.

As for the quantity of amine derivate to be added, this is the same as for substitutive derivatives of phenol nucleus.

### (Preparation of Non-Flammable Electric Discharge Fluid)

In the non-flammable electric discharge machining fluid according to the invention, there is no restriction on the means to allow the block copolymer of the formula (1), and the block copolymer of the formula and the substitutive derivatives of phenol nucleus and/or amine derivatives to dissolve in non-flammable base solution, respectively.

The non-flammable electric discharge machining fluid according to the invention can be employed by adding to the conventional aqueous machining fluids.

### (Employment of Non-flammable Electric Discharge Machining Fluid)

In connection with the employment of the non-flammable electric discharge machining fluid according to the invention, there is no particular restriction, and it can be employed with any method being used with common aqueous machining fluids. The representative mode of the employment is a process: drain the aqueous machining fluid from the working tank to purify it for recycling by filtering and deionizing with ion-exchange resins.

Optional purifying means may be additionally provided in the recycling process for the aqueous machining fluid.

### Application Example:

### (Preparation of Aqueous Machining Fluid)

The following Table 1 shows block copolymers used for the experiment. Numbers of block copolymer in Table 1 are numbers for identifying and they themselves have no technical meaning. Machining fluids prepared by using block copolymers in Table 1 are shown in Table 4, respectively.

**Table 1**

| Block copolymer | n | n/(m+p) | Mean mol.wt. |
|---|---|---|---|
| 1007 | 10 | 0.7 | 1200 |
| 1018 | 10 | 1.8 | 900 |
| 1712 | 17 | 1.2 | 1600 |
| 1718 | 17 | 1.8 | 1400 |
| 1727 | 17 | 2.7 | 1300 |
| 2112 | 21 | 1.2 | 2100 |

### (Experimental Equipment)

The experiment was conducted under the conditions shown in Table 2.

**Table 2**

| | |
|---|---|
| Electric Discharge Machine Model | Sodick H3 |
| Workpiece to be machined | SKD 61 |
| Tool electrode | Graphite ED-3 50 x 50mm square |

### (Discharging Conditions)

The following Table 3 shows electric discharging conditions.

**Table 3**

| | |
|---|---|
| Current | 90A (in shorting) |
| τon | 320 µs |
| τoff | 32 µs |

### (Experimental Procedure)

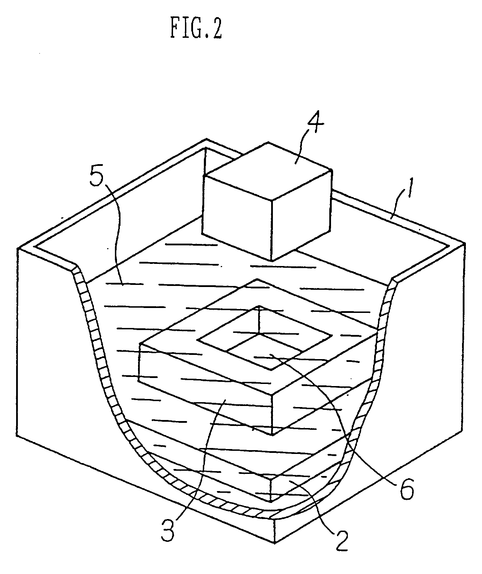

In electric discharge machining, as illustrated in Figure 2, a work table 2 is provided in the working tank 1, whereon a workpiece 3 is arranged, a square tool electrode 4 is gradually moved downwards from a position above the working tank 1 and workpiece 3 to induce electric discharges between it and the surface of the workpiece 3 immersed with the specimen (machining fluid) 5 to finally carve a hole 6 of 50mm x 50mm square and 10mm depth.

The specimen (machining fluid) 5 was reused for electric discharge machining. After the specimen was continuously drained from the working tank it was collected in the storage tank and purified by circulating it in filtering apparatus and further processing with ion-exchange resins and then returned to the working tank 1 through the chiller.

### (Experimental Results)

The following table 4 shows the experimental results. For machining fluids of numbers from 1 to 8 in Table 4, 2,6-di-tert-butyl-4-methyphenol is added by 50ppm in addition to a block copolymer and water. For matching fluids of No. 9 and 20, since 2,6-di-tert-butyl-4-methylphenol is undissolvable, it was not added. In Table 4, PEG 400 and PEG 600 mean polyethylene glycol of molecular weight 400 and 600, respectively.

**Table 4**

| No. | Machining fluid | Electrode wear rate (%) | Machining removal rate (mm³/min) |
|---|---|---|---|
| 1 | (1007) 50% water 50% | 0.55 | 5.41 |
| 2 | (1018) 50% water 50% | 0.63 | 5.12 |
| 3 | (1012) 30% water 70% | 0.78 | 3.45 |
| 4 | (1712) 50% water 50% | 0.45 | 5.50 |
| 5 | (1712) 70% water 30% | 0.49 | 4.99 |
| 6 | (1718) 50% water 50% | 0.48 | 5.36 |
| 7 | (1727) 50% water 50% | 0.51 | 4.98 |
| 8 | (2112) 50% water 50% | 0.54 | 4.67 |
| 9 | (PEG400) 50% water 50% | 1.39 | 3.43 |
| 10 | (PEG600) 50% water 50% | 1.33 | 3.48 |

As appears from the results in Table 4, machining fluids of Nos. 1 to 8 are within the range of the invention, each electrode wear rate is greatly lowered to level of below 1% and also each machining removal rate is improved. Further, the lowered wear rate of the electrode and the improved machining removal rate has been maintained, even if the machining fluids are continuously employed for electric discharge machining for a long time. Additionally, ion-exchange resins used in the circulating process of machining fluids could also be employed for a long time without replacing.

While, the use of mass-marketed fluids containing polyethylene glycol, i.e. No. 9 and 10, resulted in an electrode wear rate of more than 10% and the machining removal rate is lower.

## Claims

1. An electric discharge machining fluid comprising a triblock copolymer represented by the general formula (1) in a non-flammable base solution for electric discharge machining. 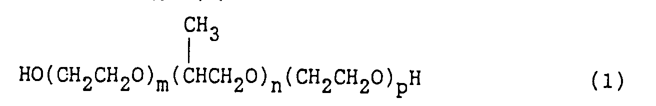 wherein n stands for the following integers; m and p stand for the integers fulfill the relationship with the formula (2).$\begin{matrix}\begin{matrix}\text{n=1 to 25} \\ \text{n/(m+p)=0.5 to 2.5}\end{matrix}\end{matrix}$

2. An electric discharge machining fluid comprising a triblock copolymer of the formula (1) and a substitutive derivative of phenol nucleus and/or an amine derivative in a non-flammable base solution for electric discharge machining.

3. An electric discharge machining fluid comprising as set forth in claim 1, wherein the volume ratio between the triblock copolymer of the formula (1) and water is 1/9 to 6/4 (block copolymer/water).

## Patentansprüche

1. Bearbeitungsflüssigkeit zur Elektroerosionsbearbeitung, die in einer nicht brennbaren Trägerlösung zur Elektroerosionsbearbeitung ein ternäres Blockcopolymer der allgemeinen Formel (1) enthält, 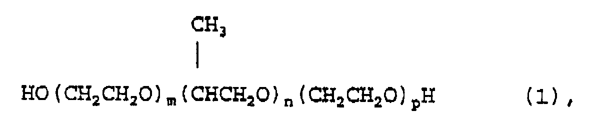 in der bedeuten:
n eine ganze Zahl von 1 bis 25, und
m und p ganze Zahlen, die der Beziehung (2)
$\begin{matrix}\begin{matrix}\text{n = 1 bis 25} \\ \begin{matrix}\text{n/(m+p) = 0,5 bis 2,5}\end{matrix}\end{matrix}\end{matrix}$ genügen.

2. Bearbeitungsflüssigkeit zur Elektroerosionsbearbeitung, die ein ternäres Blockcopolymer der Formel (1) und ein kernsubstituiertes Phenolderivat und/oder ein Aminderivat in einer nicht brennbaren Trägerlösung zur Elektroerosionsbearbeitung enthält.

3. Bearbeitungsflüssigkeit zur Elektroerosionsbearbeitung nach Anspruch 1, wobei das Volumenverhältnis zwischen dem ternären Blockcopolymer der Formel (1) und Wasser (Blockcopolymer/Wasser) 1/9 bis 6/4 beträgt.

## Revendications

1. Un fluide d'usinage par décharge électrique comprenant un copolymère à trois blocs représenté par la formule générale (1) dans une solution de base non-inflammable pour un usinage par décharge électrique. 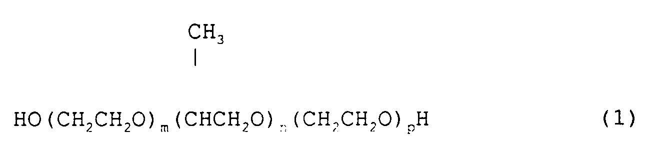 dans lequel n représente les nombres entiers suivants ; m et p représentent les nombres entiers remplissant la relation dans la formule (2)$\begin{matrix}\begin{matrix}\text{n = 1 à 25} \\ \begin{matrix}\text{n/(m+p) = 0,5à 2,5}\end{matrix}\end{matrix}\end{matrix}$

2. Un fluide d'usinage par décharge électrique comprenant un copolymère à trois blocs représenté par la formule (1) et un dérivé substitutif d'un noyau phénol et/ou un dérivé amine dans une solution de base non-inflammable, pour un usinage par décharge électrique.

3. Un fluide d'usinage par décharge électrique composé comme indiqué dans la revendication 1, dans lequel le rapport en volume entre le copolymère à trois blocs de la formule (1) et l'eau est de 1/9 à 6/4 (copolymère à blocs/eau).
